# EUROPEAN PATENT APPLICATION

(11) **EP 4 231 475 A1**
(43) Date of publication of application: **23.08.2023**
(21) Application number: 22382140.6
(22) Date of filing: 18.02.2022
(51) Int. Cl.: H02J 3/00, H02J 3/38, H02J 3/48

(54) **METHOD OF POWER MANAGEMENT OF A POWER PLANT**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

Method of power management of a hybrid co-located power plant (100), based on optimization algorithms oriented towards determining firm and predictable power scheduled, considering the minimization of the storage usage and the minimization of the energy curtailment, the method comprising:
generating a power generation schedule (205);
determining an energy storage power schedule (206);
determining a power injection schedule (207);
determining a state of charge target schedule (208) of the energy storage system (120) during the predefined time range on the basis of the forecasts parameters (204);
wherein in the predefined time range the method comprises:
supplying and/or absorbing the power from the energy storage system (120) to/from the second point of connection (121) according to the energy storage power schedule (206);
controlling the power supply of the power plant (100) from the renewable energy generation equipment (110) to the first point of connection (101) and/or to the energy storage system (120) on the basis of the power injection schedule (207) and the state of charge target (208).

## Description

### Field of invention

The present invention relates to a method of power management for a power plant comprising at least one type of renewable energy generation equipment and an energy storage system.

### Art Background

Power plants comprising renewable energy generation equipment and an energy storage system are often controlled by a power management system which determines, on the basis of some forecast parameters, an optimized power injection schedule that can be offered to an electrical grid, to which the power plant is connected to, in a predefined time range. The energy management system transmits to a grid controller of the electrical grid (controller or operator of the grid) the power injection schedule from its generation and storage resources, which has been determined, and then receives from the grid controller a committed power injection schedule. This committed power injection schedule represents an obligation for the power plant to deliver or supply the committed power during the predefined time range to the electrical grid. In co-located configurations, even if ultimately connected to the grid at the same point or not, the power injection schedules are defined separately for the generation and the storage resources at its own specific point of connection. In this type of hybrid configuration, the storage resource's power injection schedule represents a commitment negotiated in the energy markets, and its power injection or charging from the grid should not be lower and/or higher than the values in the committed schedule. On the other hand, the power injection from the generation resources into the grid shall be calculated and transmitted to the grid and/or market operator, however generally this schedule has an informative purpose and the power injection is not usually physically bounded to this schedule.

The generation of electrical power by means of renewable energy generation devices lacks however predictability and dis-patchability in the energy supply from renewable sources, for which reason renewable power plants present challenges for incorporation in the electrical grids and markets in the same way as traditional power plants are.

The inclusion of energy storage systems and the use of forecasts parameters to predict the power injection of the power plant into the grid has somehow alleviated the above mentioned problems.

When energy storage systems are used, power management methods known from the prior art provide a constant control of the battery which is then cycled in short, but fast, charging and discharging cycles, which allow the storage resource of the power plant to deliver the committed power injection schedule. This cycling, however, has a negative influence over the lifetime of the energy storage system.

There may be a need for improving the lifetime of the energy storage system by means of a novel method of power management of a power plant, while being able to reliably calculate, offer, commit and ultimately deliver and/or absorb a predetermined power supply schedule to/from the electrical grid by the storage resource, while recalculating the expected power injection from the generation resource, with the purpose of increasing the overall plant's profitability.

### Summary of the Invention

This need may be met by the subject matter according to the independent claims. Advantageous embodiments of the present invention are described by the dependent claims.

According to a first aspect of the invention a method of power management of a power plant is provided, wherein the power plant comprises at least one type of renewable power generation equipment and an energy storage system, wherein the power plant comprises a first point of connection connecting the renewable power generation equipment with an electrical grid or and offgrid connection to a specific user or independent network and a second point of connection connecting the energy storage system with the electrical grid or and offgrid connection to a specific user or independent network.

The method comprises a first step of determining a power generation schedule defining a power generation of the renewable power generation equipment of the power plant during a predefined time range on the basis of forecasts parameters. In a second step, the method comprises determining an optimized energy storage power schedule defining a discharged and/or absorbed power to/from the electrical grid or the generation resources by the energy storage system during the predefined time range on the basis of the forecasts parameters. In a third step, the method comprises determining an optimized power injection schedule of the power plant defining a power supply to the electrical grid during the predefined time range on the basis of the power generation schedule and on the basis of the energy storage power schedule. In a fourth step, the method comprises determining an optimized state of charge target schedule of the energy storage system during the predefined time range on the basis of the forecasts parameters. Finally, during the predefined time range, the method comprises the step of supplying and/or absorbing power from the energy storage system to/from the second point of connection according to the energy storage power schedule and of controlling the power supply of the power plant from the renewable energy generation equipment to the first point of connection and/or to the energy storage system on the basis of the power injection schedule and the state of charge target schedule.

In the present application, a power plant including at least one type of renewable energy generation equipment and an energy storage system is also referred to as a hybrid power plant.

According to the present application, a point of connection is an electrical connection between a component of the power plant, either the renewable power generation equipment or the energy storage system, and an electrical grid or network, allowing a passage of electrical energy from a component of the power plant to the electrical grid or from the electrical grid to a component of the power plant. The point of connection also refers to the point where the commitments and power injection requirements are established and monitored.

As the power plant comprises two points of connection, the first connecting the renewable power generation equipment with the electrical grid and the second one connecting the energy storage system with the electrical grid, the power plant is a so called co-located power plant. This means, that the power injection from the renewable power generation equipment and the energy storage system are determined, controlled and regulated separately the one from the other.

The present invention also comprises the case in which the first and the second point of connection are identical, however the power injection from the renewable power generation equipment and the energy storage system to the electrical grid are controlled separately the one from the other.

The energy storage system may for example comprise one or more batteries or accumulators which may store electric energy in form of chemical energy and/or mechanical energy. The renewable power generation equipment may comprise or may not comprise a converter, for example to convert a DC voltage (for example of a battery or an accumulator or a photovoltaic cell) to an AC voltage having a frequency for example corresponding to a nominal frequency (for example 50 Hz or 60 Hz) of an electrical utility grid. An energy storage system comprising only batteries is defined as battery energy storage system, also known as BESS.

In the present application, forecasts parameters are data and/or pieces of information that are being used to generate a power generation schedule and a state of charge target during a predefined time range. In particular, forecasts parameters are data and/or pieces of information relating to a scenario and/or a situation during the predefined time range. For example, the forecasts parameters provide information about the weather conditions in the region of the power plant during the predefined time range. The forecast parameters are therefore external constraints which influence the operation of the power plant, in particular of the renewable power generation equipment.

The power generation schedule is defined as the power generated by the renewable energy generation equipment during the predefined time. For example, the power generation schedule takes into account the amount of power that can be produced by wind turbines belonging to the power plant during the predefined time range.

The energy storage power schedule is the power that the energy storage system absorbs from the renewable power generation equipment or the grid, or supplies to the electrical grid during the predefined time range. The energy storage power schedule may be represented, for example, by an electrical power that the power plant has committed to the grid and which the power plant has therefore to supply during the predefined time range. The energy storage power schedule can also be represented by a guaranteed power supply and/or absorption to/from the electrical grid through the energy storage system. As renewable energy sources, such as wind and/or solar power, have unpredictable outputs, which are strongly influenced by constantly changing weather condition, it is often the case that a power plant with renewable power generation equipment commits to the owner of the electrical grid a certain power for a predefined time range, which power can be provided by means of an energy storage system comprised in the power plant, so that the unpredictability factor is compensated by determining an dispatching a previously defined power schedule using the storage resource.

The energy storage power schedule might have a lower and an upper limit. A lower limit defines a minimum amount of power that the energy storage system must supply to or absorb from the electrical grid during the predefined time range. An upper limit defines a maximum amount of power that the energy storage system can supply to or absorb from the electrical during the predefined time range. The lower and the upper limit may be defined by market regulations or by a controller of the electrical grid.

The energy storage power schedule is optimized in that it is determined by taking into account at least one forecast parameters in such a way, that at least an aspect of the power plant can be optimized. For example, the energy storage power schedule is chosen in such a way, that the cycling of the energy storage system is minimized to maximize the lifetime of the energy storage system.

The power injection schedule is defined as the power supplied by the power plant to the first and to the second point of connection during the predefined time range. The supplied power is composed by the power generated by the renewable power generation equipment and by the power provided (or absorbed) by the energy storage system. The power injection schedule is therefore the sum of the power injected by the renewable power generation equipment at the first point of connection, also called renewable power schedule, and the power injected or absorbed by the energy storage system at the second point of connection, that is the energy storage power schedule.

The power injection schedule is optimized in that it is determined by taking into account the energy storage power schedule, so that the power injection to the electrical grid is determined by taking into consideration an optimized power injection and/or absorption, which can be guaranteed from the energy storage system alone.

In the present application, a state of charge of the energy storage system is a value representing the amount of the available electrical energy of the energy storage system. This value can be represented as a percentage of the total possible energy capacity of the storage resource, for example 80%, or as a physical value, for example in terms of Ampere-hours (Ah) or the like.

In the present application, a state of charge target is a target value that has to be reached or maintained at each scheduled time interval (predefined time range). This target value can be expressed in percentage of the total possible capacity, such as 80% of the maximum capacity, of the energy storage system or as a physical value in Ah or the like. The state of charge target is chosen in such a way, that the lifetime of the energy storage system can be prolonged and the charging and discharging cycles of the energy storage system are minimized.

The state of charge target is therefore aimed to improve the lifetime of the energy storage system by actively controlling the amount of the power generated by the renewable power generation equipment to the energy storage system and/or to the first point of connection. The controlling is performed by taking into consideration the following factors: keeping the supplied power within tolerable limits, avoid any unnecessary power curtailment and minimize the cycling of the energy storage system. The tolerable limits may be defined by market regulations and/or by a controller of the grid, for example the owner of the electrical grid. Power curtailment is the waste of generated power, which is neither supplied to the electrical grid nor used to recharge the energy storage system.

The renewable power schedule, the energy storage power schedule and the state of charge target form all together the energy management system schedules, also called EMS schedules, which are used to supply the power to the first and second points of connection and to control the composition of the supplied power and, thus, the charge level of the energy storage system.

The method according to the first aspect of the present application is therefore directed towards two main objectives. As a first objective, the method aims at using the storage capacity and control capabilities to reduce the unpredictability of weather conditions on the generation of power by using renewable sources. This objective is achieved by determining an energy storage power generation schedule, defining a precise amount of power that shall be supplied to or absorbed from the electrical grid during the predefined time range by using a highly predictable component of the power plant, that is the energy storage system.

On the other hand, the method aims at optimizing the usage of the energy storage system by establishing a state of charge target, which is defined as a function of forecasts parameters describing the power generation conditions during the predefined time range.

The power generated by the renewable power generation equipment is either used to reach the state of charge target of the energy storage system or is, if allowed, injected to the electrical grid. The power generated by the renewable power generation equipment injected into the electrical grid is defined by the renewable power schedule.

In such a way, it is possible to better establish when the energy storage system has to be charged or discharged in order to avoid unnecessary cycling of the energy storage system and/or unnecessary curtailment of the power generated by the renewable power generation equipment.

The state of charge target schedule might be determined by further considering the power injection schedule, thus indirectly using the power generation schedule. In this way it is possible to further optimize the state of charge target schedule on the basis of the foreseen power generation, thus smoothing out possible power generation peaks in high or low production by using the capacity of the energy storage system.

According to an embodiment of the method according to the first aspect, the first and second point of connection coincide. In this case, the renewable power generation equipment and the energy storage system share therefore a common point of connection with the electrical grid. Nevertheless, the renewable power generation equipment and the energy storage system are controlled separately from each other.

According to another embodiment, the at least one type of renewable power generation equipment comprises at least one wind turbine and/or at least a solar panel. In this case, the method allows to compensate the effects of weather conditions on the power supply and/or absorption to/from the electrical grid and on the lifetime of the energy storage system by smoothing out power generation oscillations due to variable weather conditions, by determining and dispatching predictable power schedules using the storage resource.

Other types of renewable power generation equipment that can be comprised in the power plant include a turbine for the generation of hydroelectric power and/or a system for harvesting tidal power.

According to another embodiment, the forecasts parameters comprise weather forecast parameters, in particular wind speed, wind direction and/or sun irradiation in the region of the power plant. In particular, the weather forecasts parameters describe the weather conditions in the region of the power plant shortly before and/or during the predefined time range.

According to another embodiment, the forecasts parameters comprise financial parameters and/or a committed power injection schedule.

Financial parameters can be, for example, an energy price or a variation of an energy price in time. By considering the energy price variation over time, a financial optimization of the operation of the power plant is possible. For example, it is possible to supply more power to the electrical grid when the energy price is high and to recharge the energy storage system when the energy price is low.

A committed power injection schedule is a power injection schedule received from a controller or operator of the electrical grid. The committed power injection schedule, normally defined, in hybrid co-located configurations, for the storage resource, obliges the power plant to supply a predetermined amount of power to the electrical grid during the predefined time range. The committed power injection schedule represents a minimum power supply during the predefined time range. The committed power injection schedule can have an upper limit, representing a maximum power that can be supplied. Such upper limit might be equal or might be greater than the value established in the committed power injection schedule. By taking into consideration the committed power injection schedule as a forecast parameter, the state of charge target is then determined by taking into consideration the minimum amount of power, that the power plant must supply to the electrical grid through the first and/or the second point of connection during the predefined time range, thus optimizing the lifetime of the energy storage system on the basis of the minimum power supply.

In co-located configurations, the committed power injection schedule generally comprises power to be supplied from or absorbed by the energy storage system, and the renewable power generation schedule shall be recalculated in consequence.

According to another embodiment, the forecasts parameters comprise a present availability of the renewable power generation equipment and/or a present value of the state of charge of the energy storage system.

In the present application, the availability of the renewable power generation equipment is defined as the renewable power generation equipment of the power plant, provided with control capabilities, which can be used for generating power. It is for example possible, that part of the power generation equipment cannot be used shortly before and/or during the predefined time range, so that the power generation capacity of the renewable power generation equipment is reduced. By taking this into account, a more accurate power generation schedule and a more accurate state of charge target schedule can be determined.

According to a further embodiment, during the predefined time range, the power generation schedule, the energy storage power schedule, the power injection schedule and the state of charge target schedule are updated on the basis of updated forecasts parameters collected during the predefined time range. Accordingly, it is therefore possibly to recalculate the power generation schedule, the energy storage power schedule, the power injection schedule and the state of charge target schedule during the predefined time range in order to further optimize the lifetime of the energy storage system. According to this embodiment, the controlling of the power supply to and/or absorption from the electrical grid and the controlling of the power generated by the renewable power generation equipment are updated during the predefined time range, thus adapting the management of the power plant to changed conditions, so that the method can adaptively react to, for example, a peak in the power request coming from the grid and/or to variable weather conditions.

The updating can be performed only once during the predefined time range, for example after half of the predefined time range, or can be performed multiple times during the predetermined time range. If the updating is performed multiple times during the predetermined time range, then the updating can be performed at regular or irregular time intervals. In such a way, the state of charge target and/or the power injection schedule are adapted to mutating external conditions, such as the weather and/or the energy pricing, in a frequent and constant manner. Therefore, the forecasts parameters should be updated as often as possible during the predefined time range, in order to better react to variable external conditions, which influence the power generation and/or the injection capabilities and/or necessities.

According to another embodiment, the state of charge target schedule is a constant value in time. This means, that the state of charge target is a charge level of the energy storage system, which charge level remains constant over the whole predefined time range. In this way, any cycle comprising a charging or discharging of the energy storage system is avoided through the whole predefined time range, thus improving the lifetime of the energy storage system.

It can however also be the case that the state of charge target schedule is not a constant value in time, but rather a variable one. This means that, on the basis of the forecasts parameters and preferably of the power injection schedule, the state of charge target of the energy storage system is set to be a decreasing value and/or an increasing value during the predefined time range.

It might be for example the case, that, on the basis of the forecasts parameters, during a first time range in the predefined time range the state of charge target is a decreasing value and in a second time range of the predefined time range the state of charge target is an increasing value. A variable state of charge target is particularly useful to effectively compensate variable weather conditions and/or power peaks in the electrical grid, while optimizing the lifetime of the energy storage system.

According to another embodiment, the state of charge target schedule is a battery level range of the energy storage system to be achieved. A battery level range is defined as a range comprised between a lower and an upper state of charge value. By controlling the state of charge within a specific range, the method only needs to correct the composition of the supplied power when the state of charge falls below the lower state of charge value or rises above the upper state of charge value.

According to a further embodiment, in the predefined time range, the method further comprises measuring a current value of the state of charge of the energy storage system; comparing the current value of the state of charge with the state of charge target schedule; and controlling the power supply of the power plant from the renewable energy generation equipment to the first point of connection and/or to the energy storage system on the basis of the comparison between the current value of the state of charge and the state of charge target schedule.

According to this embodiment, the method provides therefore for a fully closed feedback and regulation loop to finely control the state of charge of the energy storage system, so that the state of charge target can be more effectively achieved, as the composition of the supplied is changed accordingly to the comparison between a present value of the state of charge and the state of charge target. If, for example, the present state of charge is less than the state of charge target foreseen by the state of charge target schedule, the power generated by the renewable power generation equipment is preferably supplied to the energy storage system to reach the state of charge target, or it can be also charged by taking energy from the grid. On the contrary, if a present state of charge value is higher than the state of charge target foreseen by the state of charge target schedule, the power generated by the renewable power generation equipment is supplied to the first point of connection and, if allowable, the energy storage system supplies to the second point of connection the discharge power required to reach the state of charge target.

According to a further embodiment, during the predefined time range the method further comprises the step of modifying the energy storage power schedule and the power injection schedule on the basis of generation support parameters. Generation support parameters are regulation instructions, which may limit the power supply to the electrical grid, coming from a controller of the electrical grid and allow to modify, during the predefined time range, the energy storage power schedule or the renewable power schedule based on signals received from the controller of the electrical grid. The renewable power generation equipment and the energy storage system would therefore be supporting each other in meeting the changed demand. It is also possible to establish a power link between the renewable power generation equipment and the energy storage system by means of controllers converting the power generated from the renewable power generation equipment and to a form which can be stored in the energy storage system and vice versa.

This is advantageous, because, when the EMS schedules have been established, at each moment the power injection schedule can be modified according to specifically required power regulation instructions, such as power curtailment or injection limits, which would imply either a reduction or an increase of the power injected from the renewable power generation equipment and/or the energy storage system to the electrical grid. In this way, the lifetime of the energy storage system can still be optimized without the need of unnecessarily cycling through charge and discharge cycles.

If a power increase is required from the energy storage system, the renewable power generation equipment can provide additional power to the energy storage system injection as well as to the energy storage system itself to help it maintaining the state of charge target. In a similar way, when a power reduction is required from the renewable generation units, the surplus energy is absorbed by the battery avoiding unnecessary curtailment, on the other hand, if a power increase is required, the storage resources can use its stored energy to provide the power deficit at the first point of connection.

According to yet another embodiment of the invention, the method further comprises the step of regulating the supply through control, command, measurement and alarm signals, up to completely activating and/or deactivating at least a part of the renewable power generation equipment of the power plant on the basis of a comparison between a measured current value of the state of charge and the state of charge target foreseen by the state of charge target schedule.

According to a second aspect of the invention, an arrangement for managing a power plant is provided, wherein the power plant comprises renewable power generation equipment, an energy storage system, a first point of connection connecting the renewable power generation equipment with an electrical grid and a second point of connection connecting the energy storage system with the electrical grid. The arrangement comprises an energy management system, also EMS, and a local plant controller. The energy management system is configured to determine a power generation schedule defining a power generation of the renewable power generation equipment during a predefined time range on the basis of forecasts parameters, to determine an optimized energy storage power schedule defining a discharged and/or absorbed power to/from the electrical grid by the energy storage system during the predefined time range on the basis of the forecasts parameters, to determine an optimized power injection schedule of the power plant defining a power supply to the electrical grid during the predefined time range on the basis of the power generation schedule and on the basis of the forecasts parameters and to determine an optimized state of charge target schedule of the energy storage system during the predefined time range on the basis of the forecasts parameters. The local plant controller is configured to supply and/or absorb power from the energy storage system to/from the second point of connection according to the energy storage power schedule and to control the power supply of the power plant from the renewable energy generation equipment to the first point of connection and/or to the energy storage system on the basis of the power injection schedule and the state of charge target schedule, during the predefined time range.

The energy management system can be configured to calculate the renewable power schedule from the energy storage power schedule and the power injection schedule. The renewable power schedule defines the power generated from the renewable power generation equipment that is not supplied to the energy storage system, but that is injected into the electrical grid through the first point of connection.

According to a third aspect of the invention, a power plant is provided with at least an arrangement as described above.

It is noted, that the arrangement according to the second aspect of the present invention may include any of the features disclosed in the method according to the first aspect of the invention and that, vice versa, the method according to the first aspect of the invention may include any of the features disclosed in the arrangement according to the second aspect of the invention.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a power plant according to an embodiment of the present invention.
Figure 2 shows an arrangement according to an embodiment of the present invention.
Figure 3a and 3b show possible schematical ways of functioning of an arrangement according to different embodiments of the present invention.
Figure 4 shows, schematically, a method of power management according to an embodiment of the present invention.

### Detailed Description

The illustration in the drawing is schematic. It is noted that in different figures, similar or identical elements are provided with the same reference signs or with reference signs, which are different from the corresponding reference signs only within the first digit.

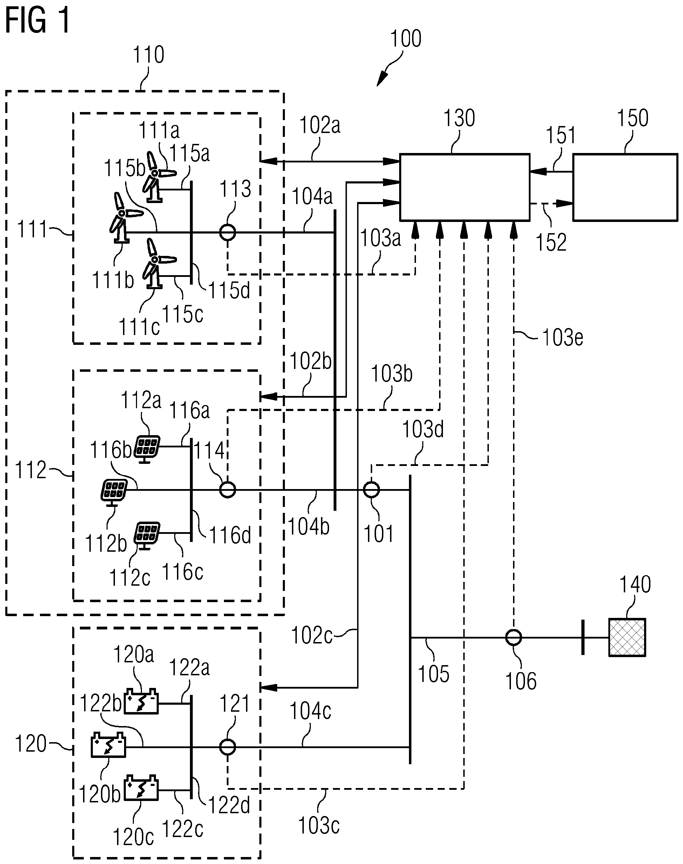

**Figure** 1 shows a power plant 100 according to an embodiment of the present invention. The power plant 100 comprises renewable energy generation equipment 110, an energy storage system 120 and an arrangement 130 for managing the power plant 100. The power plant 100 is connected through at least one point of connection to an electrical grid or network 140.

In the present embodiment, the renewable energy generation equipment 110 is of two types: on the one side there are wind turbines 111a, 111b, 11bc forming a wind power plant 111 and on the other side there are solar panels 112a, 112b, 112c forming a solar energy park 112.

The wind turbines 111a, 111b, 111c are electrically connected via power lines 115a, 115b, 115c respectively to a power line 115d and through the power line 115d to a wind power point of connection 113, which electrically connects the wind turbines 111a, 111b, 111c to the power line 104a and through this to a first point of connection 101, so that the electrical energy produced in the wind power plant 111 can be distributed to the electrical grid 140 via a power line 105.

In a similar fashion, the solar panels 112a, 112b, 112c are electrically connected via power lines 116a, 116b, 116c respectively to a power line 116d and through the power line 116d to a solar power point of connection 114, which electrically connects the solar panels 112a, 112b, 112c to the power line 104b and through this to the first point of connection 101, so that the electrical energy produced in the solar energy park 112 can be distributed to the electrical grid 140 via the power line 105.

The energy storage system 120 includes a number of batteries 120a, 120b, 120c. These are electrically connected via power lines 122a, 122b, 122c to a power line 122d and through this to a second point of connection 121. The second point of connection 121 connects the energy storage system 120 with power line 104c, so that the electrical energy produced/absorbed by the energy storage system 120 can be injected/drawn to the electrical grid 140 via the power line 105.

The energy generated from the renewable power generation equipment 110 can supply power both to the electrical grid 140 and to the energy storage system 120, as determined by the controller signals from the arrangement 130.

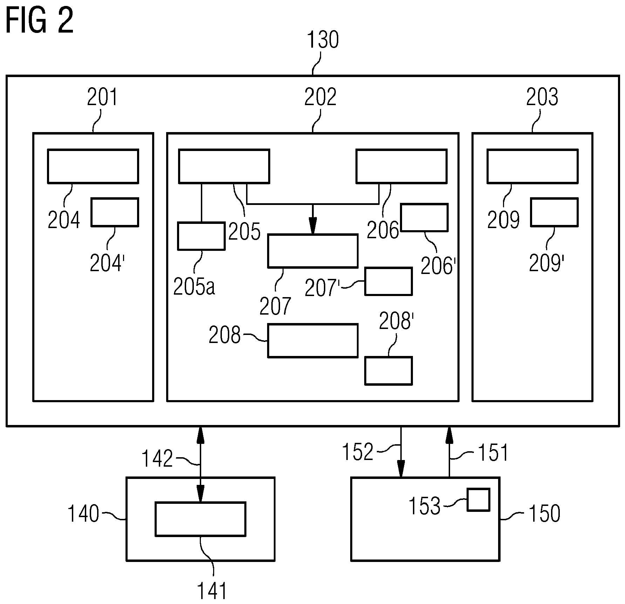

The arrangement 130, which is described in detail in **Figure 2,** controls via a feedback and regulation loop, represented by the lines 102a, 102b, 102c, the wind power plant 111, the solar energy park 112 and the energy storage system 120. In particular, each of these three components of the power plant 100 are separately controlled and regulated by the arrangement 130. In particular, the arrangement 130 is configured to regulate, connect or disconnect any of the wind turbines 111a, 111b, 111c and/or solar panels 112a, 112b, 112c. Besides the connection and disconnection of the power lines, the amount of power flow can be controlled by way of controlling, monitoring, measurement and alarm signals transmitted to each wind generation, solar generation and storage resource's controller, and its associated connection points.

If a wind turbine or a solar panel is connected, then it provides electrical power to be distributed to either the electrical grid 140 or the energy storage system 120. On the contrary, if a solar panel is disconnected, then it does not provide electrical power to either the electrical grid 140 or the energy storage system 120.

The arrangement 130 is also configured to regulate the power supply or completely connect or disconnect the whole wind power plant 111 and/or the whole solar energy park 112 by enabling or disabling the power distribution through the wind power point of connection 113 and/or through the solar power point of connection 114. To control the wind power point of connection 113 and the solar power point of connection 114, dedicated signal lines 103a and 103b are provided. These monitoring, command and control signals are sent to and received from each wind and solar generation resource's controller and point of connection.

Furthermore, the arrangement 130 is configured to regulate the power flow, connect or disconnect the energy storage system 120. If the energy storage system 120 is connected, then the batteries 120a, 120b, 120c can either be charged or discharged, depending on an energy storage power schedule 206 (see **Figure** 2) for controlling the second point of connection 121. The arrangement 130 controls the second point of connection 121 via a dedicated signal line 103c. It might also be the case that one or more batteries are connected and one or more are disconnected, so that the batteries 120a, 120b, 120c can be controlled separately by the arrangement 130. The second point of connection 121 is controlled to supply the required power to the electrical grid 140 according to an energy storage power schedule 206 (see **Figure** 2), which is determined on the basis of forecasts parameters 204 (see **Figure** 2), such as, for example, a specific power supply schedule (committed power schedule) 153 (see **Figure** 2) requested by a unit 150 to the power plant 100 through a signal line 151 and confirmed by the power plant via a signal line 152.

By satisfying the request of the unit 150 only using available battery power, the power plant 100 is less prone to fail in meeting the power supply demanded as a consequence of mutable weather conditions, thus optimizing the financial operability of the hybrid power plant itself.

Also, the arrangement 130 is configured to control the first point of connection 101 via a dedicated signal line 103d. And the connection of the whole plant to the grid 140 via a power plant point of connection 106, which is controlled via a dedicated signal line 103e.

From **Figure 1****,** as well as from the following **Figure 2****,** it is clear, how the arrangement 130 controls the renewable power generation equipment 110 and the energy storage system 120 separately from each other in order to satisfy a certain power schedule, for which power and/or storing capacity of the batteries 120a, 120b and 120c has been committed or reserved, and to optimize the lifetime of the energy storage system 120 by avoiding unnecessary cycling and or power curtailment thanks to a state of charge target, which must be reached, and that has been calculated using an optimization algorithms within arrangement 130.

**Figure 2** shows the arrangement 130 in a detailed manner. The arrangement 130 comprises a forecast service system 201, an energy management system 202 and a local plant controller 203.

The forecast service system 201 retrieves forecasts parameters 204, such as weather forecast data, from sources which are external to the arrangement 130, such as forecast provider's inputs. The forecasts parameters 204 are then passed to the energy management system 202. The forecasts parameters can also comprise, for example, a committed power schedule 153, which has to be delivered to the market or a user 150. The committed power schedule 153 is transmitted to the arrangement 130 via a signal line 151 and accepted by the arrangement 130 via a signal line 152. A parameter can also be a committed power schedule received from a controller 141 of the electrical grid 140.

The energy management system 202 is configured to, on the basis of the forecasts parameters 204, to determine a power generation schedule 205 of the power plant 100 during a predefined time range and to determine an optimized energy storage power schedule 206 defining a discharge and/or absorbed power to/from the electrical grid 140 or from the generators in 110 by the energy storage system 120 during the predefined time range. The power generation schedule 205 can also take into consideration that not all of the components of the renewable power generation equipment 110 are switched on or connected during the predefined time range. This can for example be convenient, when peak powers are produced, due to extreme weather conditions, and it is more convenient to disconnect a wind turbine or a solar panel, rather than curtail the produced power.

Furthermore, the energy management system 202 also determines an optimized power injection schedule 207 of the power plant 100 during the predefined time range. The power injection schedule 207 is the sum of the power injected by the renewable power generation equipment 110 and the one defined by the energy storage power schedule 206. The difference between the power injection schedule 207 and the energy storage power schedule 206 defines a renewable power schedule 205a, which is the power generated by the renewable power generation equipment 110 and injected to the electrical grid 140. The power generated by the renewable power generation equipment 110 and not injected into the electrical grid 140 is supplied to the energy storage system 120 to be recharged, or it is curtailed if unavoidable, for example when the storage is full or it has reached a maximum desirable state of charge.

The energy management system 202 must be configured to determine, starting from the power injection schedule 207 and the energy storage power schedule 206, the renewable power schedule 205a.

The energy management system also determines an optimized state of charge target schedule 208 representing a charge level of the energy storage system 120 to be achieved during the predefined time range. The state of charge target schedule 208 is determined of the base of the forecasts parameters 204 and is aimed at optimizing the lifetime of the energy storage system 120 and the minimization of the energy curtailment from the generation resources 110.

The energy storage power schedule 206, the power injection schedule 207 and the state of charge target schedule 208 are optimized in view of the forecasts parameters, with the objective of maximizing or optimizing at least one aspect of the power plant 100, such as the lifetime of the energy storage system 120, the financial profitability of the plant or the power curtailment.

The energy management system 202 then transmits the energy storage power schedule 206, the power injection schedule 207 the state of charge target schedule 208 and, if the renewable power schedule 205a is determined by the energy management system 202, also the renewable power schedule 205a to the local plant controller 203. The real time references and signals are determined by the local plant controller 203 on the basis of the power injection schedule 207 and the energy storage power schedule 206.

The local plant controller 203 saves the renewable power schedule 205a, the energy storage power schedule 206 and the state of charge target schedule 208 as EMS schedules 209.

During the predefined time range, the local plant controller 203 is configured to supply and/or absorb power from the energy storage system 120 to/from the second point of connection 121 according to the energy storage power schedule 206 and to control the power supplied by the renewable power generation equipment 110 through the points of connection 113, 114 and/or to the energy storage system 120 on the basis of the renewable power schedule 205a, and thus on the basis of the power injection schedule 207, and the state of charge target schedule 208.

The energy management system 202 can also be configured to retrieve, during the predefined time range, updated forecasts parameters 204' from the forecast service system 201. On the basis of the updated forecasts parameters 204', the energy management system can update the power generation schedule 205, the energy storage power schedule 206, the power injection schedule 207 and the state of charge target schedule 208. The updated energy storage power schedule 206', the updated power injection schedule 207' and the updated state of charge target schedule 208' are transmitted to the local plant controller 203 as updated energy management system schedules 209', which uses them to update the controlling of the power plant 100 by taking into consideration changed external conditions influencing the power generation and/or supply and/or absorption. In this way, mutable weather and/or economic conditions might be taken into account and might be used for optimizing the lifetime of the energy storage system 120.

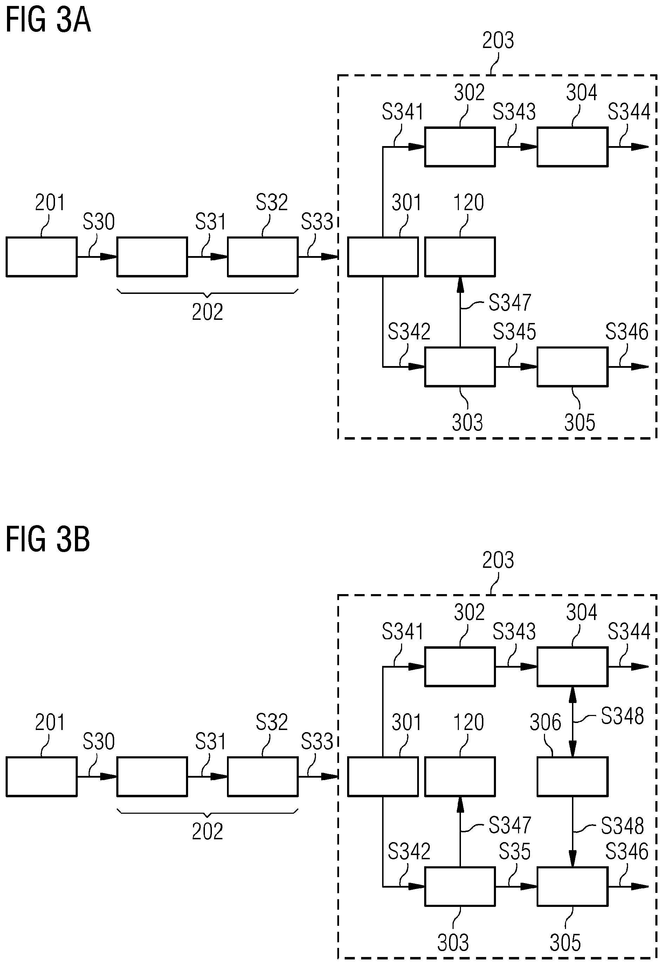

**Figure 3a** and **3b** show passible, schematical ways of functioning of the arrangement 130.

In **Figure 3a** the forecast service system 201 provides forecasts parameters 204 to the energy management system 202 (step S30). The forecasts parameters 204 can be directed towards the optimization of the generated power and/or the lifetime of the energy storage system 120 on the basis of weather forecast parameters (natural forecast), a price forecast for the energy price (energy arbitrage) or a state of charge objective (time shifting) of the energy storage system 120. The energy management system 202 generates a power generation schedule 205, determines an energy storage power schedule 206 and a state of charge target schedule 208 on the basis of the forecasts parameters 204 (step S31). A power injection schedule 207 is determined on the basis of the power generation schedule 205 and the energy storage power schedule 206 and a renewable power schedule 205a is determined on the basis of the power injection schedule 207 and the energy storage power schedule 206 (step S32). The energy storage power schedule 206, the power injection schedule 207 and the state of charge target schedule 208 are optimized in view of the forecasts parameters, with the objective of maximizing or optimizing at least one aspect of the power plant 100, such as the lifetime of the energy storage system 120, the financial profitability of the plant or the power curtailment.

The energy storage power schedule 206, the power injection schedule 207 and the state of charge target schedule 208 are sent to the local plant controller 203 (step S33). The local plant controller 203 has a main controlling unit 301, configured to control an energy storage power injection unit 302 and a renewable power injection unit 303. In step S341 the main controlling unit 301 sends to the energy storage power injection unit 302 the real time reference setpoint signals for controlling the injection and/or absorption of the power to/from the electrical grid 140 or the generation units 110 by means of a first grid power regulation unit 304 (step S343) through the second point of connection 121 (step S344). In step S342 the main controlling unit 301 sends to the renewable power injection unit 303 the renewable power real time reference setpoint signals for controlling the injection of the power to the electrical grid 140 by means of a second grid power regulation unit 305 (step S345) to the first point of connection 101 (step S346). Furthermore, in step S347 the renewable power injection unit 303 supplies power to the energy storage system 120.

According to **Figure 3b****,** a generation support unit 306 is provided in the local plant controller. The generation support unit 306 receives signals from a controller 141 of the grid 140. In this case, the generation support unit 306 communicates with both grid power regulation units 304, 305 any variations that might be required for grid power regulation such as power limiting, power curtailment, power frequency control (step S348). If this is the case, the power generation unit 306 allows a certain flexibility in managing the variation, as the renewable power generation equipment 110 and the energy storage system 120 support each other in terms of achieving the power injection variations dictated by the controller 141 of the grid 140, so that a lesser amount of power is curtailed and the state of charge target schedule 208 can still be achieved, thus enhancing the lifetime of the battery.

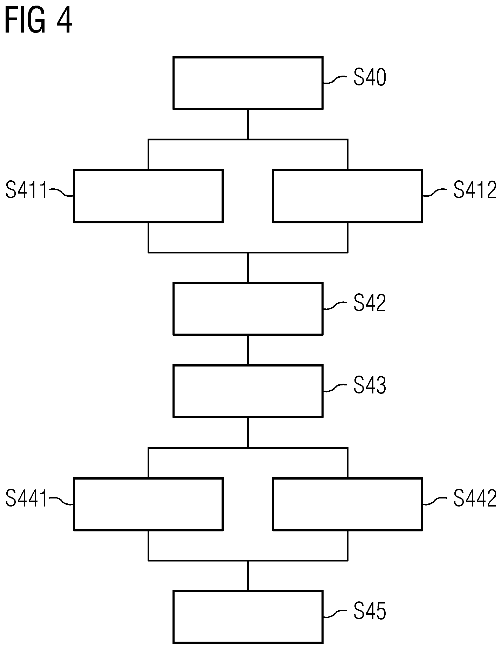

**Figure 4** shows, schematically, a method of power management of the power plant 100 according to the invention.

In a first step S40 forecasts parameters 204 are collected from the forecast service system 201.

The forecasts parameters 204 can be of different types. It is for example possible, that the forecasts parameters 204 are weather forecasts data for the region in which the power plant 100 is situated. For example, the forecasts parameter 204 can relate to wind speed, wind direction, precipitations and/or solar irradiation. If the renewable energy generation equipment 110 comprises a system for harvesting tidal energy, the forecasts parameters 204 can also provide information about the tides.

The forecasts parameters 204 can however also relate to financial data, such as the energy price, and/or to parameters providing information about the energy market, such as a requested power supply or a power injection schedule, that the operator of the power plant 100 committed to a controller of the grid 140.

Also, the forecasts parameters 204 can provide information about the power plant 100. In particular, the forecasts parameters 204 can relate to a desired state of charge of the energy storage system 120 to be achieved or maintained and/or to the availability of one or more parts of the renewable energy generation equipment 110.

The forecasts parameters 204 can relate to a present time range. It is however preferable, that the forecasts parameters 204 relate to information during the predefined time range.

In a second step S411, the energy management system 202 determines a power generation schedule 205 on the basis of the forecasts parameters 204 for the predefined time range. At the same time, in a parallel step S412, an optimized energy storage power schedule 206 is determined on the basis of the forecasts parameters, with the aim of minimizing storage usage and energy curtailment.

According to an embodiment, the energy storage power schedule 206 is determined on the basis of a committed power schedule 153, that the arrangement 130 offered to a user 150.

In a third step S42, the energy management system 202 determines an optimized power injection schedule 207 on the basis of the power generation schedule 205 and on the basis of the energy storage power schedule 206.

In a further step S43, the energy management system 202 also determines an optimized state of charge target schedule 208 on the basis of the forecasts parameter 204 for the predefined time range.

In an embodiment, the state of charge target schedule 208 is determined on the basis of both the forecasts parameters 204 and of the power injection schedule 207.

The state of charge target schedule 208 determined in step S43 can be a constant value for the whole predefined time range, for example a certain amount of the state of charge of the energy storage system 120 that has to be maintained. It can also be the case, that the state of charge target schedule 208 is a range having a minimum and a maximum value. In this case, the method allows the charge level of the energy storage system 120 to move within certain boundaries.

It could also be the case, that the state of charge target schedule 208 is not a constant value over the predefined time range, but rather a variable one. In this case, the method takes into account variable conditions, which determine a variable output of the renewable energy generation equipment 110, such as variable weather conditions and/or variable energy prices. It can, for example, be the case that the state of charge target schedule 208 is a declining value of the state of charge during a first time period of the predefined time range and a rising value in a second time period, which comes after the first one, of the predefined time range.

The energy storage power schedule 206, the power injection schedule 207 and the state of charge target schedule208 are optimized in view of the forecasts parameters, with the objective of maximizing or optimizing at least one aspect of the power plant 100, such as the lifetime of the energy storage system 120, the financial profitability of the plant or the power curtailment.

In a fifth step, the energy storage power schedule 206, the power injection schedule 207 and the state of charge target schedule 208 are used by the local plant controller 203. The local plant controller 203 supplies the power from the energy storage system 120 to the second point of connection 121 according to the energy storage power schedule 206 (step S441) and controls the supply of the generated power from the renewable power generation equipment 110 to the first point of connection 101 and/or to the energy storage system 120 according to the power injection schedule 207 and the state of charge target schedule 208 (step S442).

According to an embodiment of the invention, during the predefined time period, updated forecasts parameters 204' are collected by the forecast service system 201 and are elaborated by the energy management system 202 to update power generation schedule 205, the energy storage power schedule 206, the power injection schedule 207 and the state of charge target schedule 208.

In this case, the steps S40 to S442 are repeated.

The updated forecasts parameters 204' can be provided at regular or irregular time intervals during the predefined time range.

According to **Figure 4****,** the method has a feedback and regulating step S45, in which a present value of the state of charge is measured and compared with the state of charge target schedule 208. If necessary, the composition of the supplied power from the renewable power generation equipment 110 is regulated on the basis of the result of the comparison.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Method of power management of a power plant (100) comprising at least one type of renewable power generation equipment (110) and an energy storage system (120), wherein the power plant (100) comprises a first point of connection (101) connecting the renewable power generation equipment (110) with an electrical grid (140) and a second point of connection (121) connecting the energy storage system (120) with the electrical grid (140), the method comprising:
determining a power generation schedule (205) defining a power generation of the renewable power generation equipment (110) of the power plant (100) during a predefined time range on the basis of forecasts parameters (204);
determining an optimized energy storage power schedule (206) defining a discharged and/or absorbed power to/from the electrical grid (140) or from the power generation equipment (110) by the energy storage system (120) during the predefined time range on the basis of the forecasts parameters (204) ;
determining an optimized power injection schedule (207) of the power plant (100) defining a power supply to the electrical grid (100) during the predefined time range on the basis of the power generation schedule (205) and on the basis of the energy storage power schedule (206);
determining an optimized state of charge target schedule (208) of the energy storage system (120) during the predefined time range on the basis of the forecasts parameters (204) ;
wherein in the predefined time range the method comprises:
supplying and/or absorbing the power from the energy storage system (120) to/from the second point of connection (121) according to the energy storage power schedule (206);
controlling the power supply of the power plant (100) from the renewable energy generation equipment (110) to the first point of connection (101) and/or to the energy storage system (120) on the basis of the power injection schedule (207) and the state of charge target schedule (208).

2. Method according to claim 1, wherein the first and the second point of connection (101, 121) coincide.

3. Method according to any of the preceding claims, wherein the at least one type of renewable power generation equipment (110) comprises at least one wind turbine (111a, 111b, 111c) and/or at least a solar panel (112a, 112b, 112c).

4. Method according to any of the preceding claims, wherein the forecasts parameters (204) comprise weather forecast parameters, in particular wind speed, wind direction and/or sun irradiation in the region of the power plant (100).

5. Method according to any of the preceding claims, wherein the forecasts parameters (204) comprise financial parameters and/or a committed power injection schedule.

6. Method according to any of the preceding claims, wherein the forecasts parameters (204) comprise a present availability of the renewable power generation equipment (110) and/or a desired state of charge to be achieved or maintained by the energy storage system (120).

7. Method according to any of the preceding claims, wherein, during the predefined time range, the method further comprises:
updating the power generation schedule (205), energy storage power schedule (206), the power injection schedule (207) and the state of charge target schedule (208) on the basis of updated forecasts parameters (204') collected during the predefined time range.

8. Method according to claim 7, wherein the updating is performed at regular or irregular time intervals.

9. Method according to any of the preceding claims, wherein the state of charge target schedule (208) is a constant value in time.

10. Method according to any of the preceding claims, wherein the state of charge target schedule (208) is a battery level range of the energy storage system (120) to be achieved.

11. Method according to any of the preceding claims, wherein in the predefined time range the method further comprises:
measuring a current value of the state of charge of the energy storage system;
comparing the current value of the state of charge with the scheduled state of charge target schedule (208);
controlling the power supply of the power plant (100) from the renewable energy generation equipment (110) to the first point of connection (101) and/or to the energy storage system (120) on the basis of the comparison between the current value of the state of charge and the state of charge target schedule (208).

12. Method according to any of the preceding claims, wherein during the predefined time range the method further comprises:
modifying the energy storage power schedule (206) and the power injection schedule (207) on the basis of generation support parameters.

13. Method according to any of the preceding claims, wherein, during the predefined time range, the method further comprises:
activating and/or deactivating at least a part of the renewable power generating equipment (110).

14. Arrangement (130) for managing a power plant (100), including renewable power generation equipment (110), an energy storage system (120), a first point of connection (101) connecting the renewable power generation equipment (110) with an electrical grid (140) and a second point of connection (121) connecting the energy storage system (120) with the electrical grid (140), the arrangement (130) comprising:
an energy management system (202), based on optimization algorithms oriented toward the minimization of the storage usage and the minimization of the energy curtailment, by determining firm and predictable power schedules, configured to:
generate a power generation schedule (205) defining a power generation of the renewable power generation equipment (110) during a predefined time range on the basis of forecasts parameters (204);
determine an optimized energy storage power schedule (206) defining a discharged and/or absorbed power to/from the electrical grid (140) by the energy storage system (120) during the predefined time range on the basis of the forecasts parameters (204);
determine an optimized power injection schedule (207) of the power plant (100) defining a power supply to the electrical grid (140) during the predefined time range on the basis of the power generation schedule (205) and on the basis of the energy storage power schedule (206); and
determine an optimized state of charge target schedule (208) of the energy storage system (120) during the predefined time range on the basis of the forecasts parameters (204);
a local plant controller (203) configured to:
supply and/or absorb the power from the energy storage system (120) to/from the second point of connection (121) according to the energy storage power schedule (206);
control the power supply of the power plant (100) from the renewable energy generation equipment (110) to the first point of connection (101) and/or to the energy storage system (120) on the basis of the power injection schedule (207) and the state of charge target schedule (208);
during the predefined time range.

15. Power plant (100) comprising at least an arrangement (130) according to claim 14.
